# EUROPÄISCHE PATENTSCHRIFT

(11) **EP 0 452 619 B1**
(45) Veröffentlichungstag und Bekanntmachung des Hinweises auf die Patenterteilung: **05.04.1995**
(21) Anmeldenummer: 91101249.0
(22) Anmeldetag: 31.01.1991
(51) Int. Cl.: B01J 21/06, B01J 35/10, C04B 35/46

(54) **Titandioxidpresslinge, Verfahren zu ihrer Herstellung sowie ihre Verwendung**
Pressed titanium dioxide, process for its manufacture and its use
Oxyde de titane comprimé, procédé pour le fabriquer et son application

(30) Priorität: 19.04.1990 DE 4012479
(43) Veröffentlichungstag der Anmeldung: 23.10.1991
(73) Patentinhaber: Degussa Aktiengesellschaft, 60311 Frankfurt (DE)
(72) Erfinder: Brand, Reinhold, Dr., W-6450 Hanau 1 (DE); Engler, Bernd H., Dr., W-6450 Hanau 9 (DE); Foerster, Martin, Dr., W-6471 Büdingen-Calbach (DE); Hartmann, Werner, Dr., W-6113 Babenhausen (DE); Kleinschmit, Peter, Dr., W-6450 Hanau 9 (DE); Koberstein, Edgar, Dr., W-8755 Alzenau (DE); Ohmer, Johannes, Dr., W-6454 Bruchköbel (DE); Schwarz, Rudolf, Dr., W-8755 Alzenau-Wasserlos (DE)

(56) Entgegenhaltungen:
- EP-A- 0 038 741
- EP-A- 0 327 723
- EP-A- 0 389 041
- DE-A- 3 217 751
- US-A- 4 668 501
- A.Berger, Die Farbe, 8 (1959), 187-202
- Römpps Chemie-Lexikon, 8te Aufl., Franckh'sche Verlagshandlung Stuttgart 1988, 4395
- The Condensed Chemical Dictionary, 7th Ed., Reinhold Publishing Corporation 1966, 985

## Beschreibung

Die Erfindung betrifft Titandioxidpreßlinge, das Verfahren zu ihrer Herstellung und Verwendung als Katalysatorträger oder Katalysatoren.

Pyrogen hergestelltes Titandioxid wird durch Hochtemperaturhydrolyse einer verdampfbaren Titanverbindung, in der Regel Titantetrachlorid, in einer Knallgasflamme hergestellt. Dieses Verfahren wird in der DE-C 870 242 (1953) beschrieben. Die entstehenden Produkte, die überwiegend Anatasstruktur haben, sind hydrophil, sehr rein und äußerst feinteilig. Die Primärteilchen (DIN 53 206) zeigen in elektronenmikroskopischen Aufnahmen Kugelform und Durchmesser von 10 - 100 nm. Ein im Handel befindliches Produkt hat eine mittlere Primärteilchengröße von 30 nm. Definierte Agglomerate (nach DIN 53 206) existieren nicht. Die Oberfläche der Teilchen ist glatt und porenfrei. Es besteht nur eine äußere, leicht zugängliche Oberfläche. Die spezifische Oberfläche nach BET kann - je nach Produktionsbedingungen- zwischen 20 und 100 m² / g liegen. Das erwähnte Handelsprodukt weist eine spezifische Oberfläche von 50 ± 15 m² /g auf.

Es ist bekannt, pulverförmiges pyrogen hergestelltes Titandioxid aufgrund der hohen Reinheit, der hohen spezifischen Oberfläche und des Fehlens von Poren als Titandioxid-Komponente oder als Trägermaterial in pulverförmigen Katalysatorsystemen einzusetzen. (V. Rives-Arnau, G. Munuera, Appl. Surface Sci. 6 (1980) 122; N. K. Nag, T. Fransen, P. Mars, J. Cat. 68; 77 (1981); F. Solymosi, A. Erdöhelyi, M. Kocsis, J. Chem. Soc. Faraday Trans 1, 77, 1003 (1981); D. G. Mustard, C. H. Bartholomew, J. Cat. 67, 186 (1981); M. A. Vannice, R. L. Garten, J. Cat. 63, 255 (1980), M. A. Vannice, R. L. Garten, J. Cat. 66, 242 (1980).

Soll pyrogen hergestelltes Titandioxid im technischen Maßstab in Katalysatorsystemen verwendet werden, ist es zweckmäßig, das pulverförmige Produkt in Formkörper zu überführen.

Da pyrogen hergestelltes Titandioxid besonders feinteilig ist, bereitet die Verformung zu Katalysatorträgern Schwierigkeiten.

Aus der DE-A 31 32 674 ist ein Verfahren zur Herstellung von Preßlingen aus pyrogen hergestelltem Titandioxid bekannt, bei dem Kieselsol als Bindemittel verwendet wird. Als Preßhilfsmittel wird Äthandiol, Glycerin, Erythrite, Pentite oder Hexite eingesetzt. Dieses Verfahren hat den Nachteil, daß bei der großtechnischen Herstellung der Preßlinge ein unerwünschtes "Deckeln" bei den Preßlingen auftritt, d. h., eine obere Schicht löst sich wieder von den Preßlingen.

Zusätzlich enthalten die Formkörper neben TiO₂ auch beträchtliche Mengen an SiO₂, das aus dem Bindemittel herrührt und die katalytische Wirksamkeit beeinflußt.

Aus der DE-A 32 17 751 ist die Verpressung von pyrogen hergestelltem Titandioxid bekannt, bei welchem organische Säuren oder sauer reagierende Salze als intermediäre Bindemittel verwendet werden. Dieses Verfahren hat den Nachteil, daß durch die Behandlung mit organischen Säuren oder sauer reagierenden Salzen die Oberflächenbeschaffenheit des pyrogen hergestellten Titandioxides verändert wird.

Aus der DE-A 38 03 894 ist ein Verfahren zur Herstellung von Titandioxidpreßlingen bekannt, bei dem man pyrogen hergestelltes Titandioxid mit einem Porenbildner, wie z. B. Harnstoff, und mit Wasser zusätzlich mit einem Bindemittel, wie z. B. Kaolin, und mit einem Tablettierhilfsmittel, wie z. B. Wachs, vermischt und kompaktiert, die erhaltene Masse trocknet und zu einem Pulver zerkleinert, das Pulver zu Preßlingen verpreßt und die erhaltenen Preßlinge tempert.

Das Dokument EP-A 0 389 041 beschreibt ein Verfahren zur Herstellung von Titandioxidformlingen, bei welchem Titandioxid mit Wasser und Ammoniak oder Alkanolamin oder einer Ammoniak abgebenden Verbindung vermischt und geknetet wird.

Das Dokument EP-A 0 038 741 beschreibt ein Verfahren zur Herstellung von Titandioxidformlingen, bei welchem Wasser, amorphes Titandioxid und ein Additiv, wie zum Beispiel Cellulose oder Carboxycellulose miteinander vermischt und verformt werden.

Das Dokument US-A 4,668,501 beschreibt ein Verfahren zur Herstellung von Titandioxidpulver, bei welchem man Titandioxidpulver in einer Ammoniakatmosphäre auf Temperaturen von 500 bis 950 °C erhitzt. Das Titandioxidpulver ist dann blaugefärbt.

Die bekannten Verfahren haben den wesentlichen Nachteil, daß ein Bindemittel eingesetzt werden muß, das im Preßling verbleibt. Dies führt zur Veränderung der katalytischen Wirkung des hochreinen pyrogen hergestellten Titandioxides.

Aus der älteren Anmeldung gemäß DE-A 39 13 938 ist ein Verfahren zur Herstellung von Titandioxidpreßlingen bekannt, bei welchem man pyrogen hergestelltes Titandioxid mit Harnstoff, Graphit und Wasser vermischt, kompaktiert, die erhaltene Masse gegebenenfalls bei 80 °C bis 120 °C trocknet und zerkleinert, anschließend extrudiert oder tablettiert und die erhaltenen Preßlinge bei einer Temperatur von 710 °C bis 1000 °C während eines Zeitraumes von 0,5 bis 6 Stunden tempert.
Die erhaltenen Titandioxidpreßlinge weisen auf Grund des bei der Herstellung eingesetzten Graphits eine Graufärbung auf, die auf eine unvollständige Entfernung des Graphits bei der Temperung hinweist. Der Restgehalt an Graphit kann zu einer erheblichen Beeinträchtigung der Katalysatorwirkung führen.

Es besteht somit eine Aufgabe Titandioxidpreßlinge aus pyrogen hergestelltem Titandioxid herzustellen, welches frei von Bindemitteln und Restgehalt an Graphit ist. Dies ist an einem hohen Weißgrad der Titandioxidpreßlinge erkennbar.

Gegenstand der Erfindung sind Titandioxidpreßlinge mit den folgenden physikalisch-chemischen Kenndaten:

| | |
|---|---|
| Außendurchmesser | 0,7 - 25 mm |
| BET Oberfläche nach DIN 66 131 | > 1 - 25 m²/g |
| Porenvolumen | 0,01 - 0,30 ml/g |
| Porenverteilung | mindestens 90 % der Poren im Bereich d_{Poren} = 10 - 60 nm |
| Bruchfestigkeit | 20 - 150 N/Preßling |
| TiO₂-Phase | 90 % Rutil; Rest Anatas |
| Zusammensetzung | > 99 % TiO₂ |
| Weißgrad nach Berger | > 35 |

Ein weiterer Gegenstand der Erfindung ist ein Verfahren zur Herstellung der Titandioxidpreßlinge, bei dem man das pyrogen hergestellte Titandioxid in Gegenwart von vollentsalztem Wasser mit Methylhydroxyethylcellulose und/oder mit Milchsäure intensiv vermischt, die erhaltene homogene Mischung ohne vorherige weitergehende Behandlung bei Drücken zwischen 5 und 100 bar (= 500 bis 10.000 kilopascal) zu Formkörpern extudiert, die erhaltenen Formkörper bei Temperaturen zwischen 50 und 120 °C trocknet und sie dann in Umgebungsluft bei im Bereich von 400 bis 800 °C liegenden Temperaturen 1 bis 5 Stunden kalziniert.

Die erfindungsgemäßen Titandioxidpreßlinge weisen auf Grund des Extrusionsverfahrens eine zylindrische Form auf.

Ihre Reinheit ist deutlich höher als bei bekannten Titandioxidpreßlingen, die aus pyrogen hergestelltem Titandioxid geformt wurden.

Die erfindungsgemäßen Preßlinge können entweder direkt als Katalysatoren oder als Katalysatorträger, nachdem die Formkörper während oder nach ihrer Herstellung mit einer Lösung einer katalytisch wirksamen Substanz getränkt und ggf. durch eine geeignete Nachbehandlung aktiviert wurden, Verwendung finden.

Die erfindungsgemäßen Preßlinge weisen die folgenden Vorteile auf:
Sie weisen - erkennbar durch den hohen Weißgrad eine hohe Reinheit ohne Bindemittelreste auf. Sie bieten somit optimale Voraussetzungen für katalytische Anwendungen. Diese hochreinen Titandioxidpreßlinge können auf Grund des erfindungsgemäßen Herstellungsverfahrens in > 90 % Rutil- Modifikation erhalten werden. Sie weisen dabei hohe Festigkeiten und hohe Porenvolumina auf. Der überwiegende Anteil der Poren liegt im Mesoporenbereich. Es sind keine Poren < 10 nm vorhanden.

### Beispiele

Als Titandioxid wird in den Beispielen das pyrogen hergestellte Titandioxid P 25 verwendet, das mit den folgenden physikalisch-chemischen Kenndaten charakterisiert wird:

| | | TiO₂ P 25 |
|---|---|---|
| Oberfläche nach BET | m² / g | 50 ± 15 |
| Mittlere Größe der Primärteilchen | nm | 30 |
| Stampfdichte¹⁾ normale Ware | g / l | ca. 150 |
| Trocknungsverlust²⁾ (2 Stunden bei 105 °C) | % | < 1,5 |
| Glühverlust²⁾⁵⁾ (2 Stunden bei 1000 °C) | % | < 2 |
| pH-Wert³⁾ (in 4 %iger wäßriger Dispersion) | | 3 - 4 |
| SiO₂⁶⁾ | % | < 0,2 |
| Al₂O₃⁶⁾ | % | < 0,3 |
| Fe₂O₃⁶⁾ | % | < 0,01 |
| TiO₂⁶⁾ | % | > 99,5 |
| HCl⁶⁾⁸⁾ | % | < 0,3 |

| | | |
|---|---|---|
| 1) nach DIN 53 194 | | |
| 2) nach DIN 55 921 | | |
| 3) nach DIN 53 200 | | |
| 5) bezogen auf die 2 Stunden bei 105 °C getrocknete Substanz | | |
| 6) bezogen auf die 2 Stunden bei 1000 °C geglühte Substanz | | |
| 8) HCl-Gehalt ist Bestandteil des Glühverlustes | | |

Die BET-Oberfläche wird gemäß DIN 66 131 mit Stickstoff bestimmt.

Das Porenvolumen wird rechnerisch aus der Summe der Mikro-, Meso- und Markoporen bestimmt.

Die Bruchfestigkeit wird mittels des Bruchfestigkeitstesters der Fa. Erweka, Typ TBH 28, bestimmt.

Die Bestimmung der Mikro- und Mesoporen erfolgt durch Aufnahme einer N₂-Isotherme und deren Auswertung nach BET, de Boer und Barret, Joyner, Halenda.

Die Bestimmung der Makroporen erfolgt durch das Hg-Einpreßverfahren.

### Beispiel 1:

8 kg Titandioxid P25 (100 % TiO₂)
1 kg 2 %ige Tylose-Lösung (0,25 % Tylose) (=Methylhydroxyethylcellulose)
werden unter Zusatz von vollentsalztem Wasser in einem Mischer intensiv vermischt. Anschließend wird die Mischung in einem Knetaggregat 1 h bei einer Temperatur zwischen 40 und 80 °C geknetet. Man erhält eine plastische Knetmasse, die bei Drücken zwischen 5 - 20 bar (= 500 bis 2000 kilopascal) extrudiert wird. Die bei 70 °C getrockneten Strangpreßlinge werden schließlich bei 650 °C während 3 Stunden getempert. Die erhaltenen Strangpreßlinge weisen die folgenden physikalischen Kenndaten auf:

| | | |
|---|---|---|
| 1 | Außendurchmesser | 0,8 mm |
| 2 | BET Oberfläche nach DIN 66 131 | 20 m²/g |
| 3 | Porenvolumen | 0,25 ml/g |
| 4 | Porenverteilung | keine Poren < 10 nm ⌀ 90 % der Poren im Bereich 20 - 50 nm |
| 5 | Bruchfestigkeit | 40 N/Strangpreßling |
| 6 | Zusammensetzung | 99,5 % TiO₂ |
| 7 | TiO₂-Phase | 91 % Rutil, Rest Anatas |
| 8 | Weißgrad nach Berger | 70 |

### Beispiel 2:

8,0 kg Titandioxid (100 % TiO₂
1,0 kg 2 %ige Tylose-Lösung (0,25 % Tylose) (=Methylhydroxyethylcellulose)
50 g 90 %ige Milchsäure-Lösung (0,56 % Milchsäure)
werden wie unter Beispiel 1 verarbeitet.
Die erhaltenen Strangpreßlinge weisen die folgenden physikalisch-chemischen Kenndaten auf:

| | | |
|---|---|---|
| 1 | Außendurchmesser | 0,9 mm |
| 2 | BET Oberfläche nach DIN 66 131 | 18 m²/g |
| 3 | Porenvolumen | 0,23 ml/g |
| 4 | Porenverteilung | 90 % innerhalb 20 - 50 nm |
| 5 | Bruchfestigkeit | 50 N/Strangpreßling |
| 6 | Zusammensetzung | > 99 % TiO₂ |
| 7 | TiO₂-Phase | 94 % Rutil, Rest Anatas |
| 8 | Weißgrad nach Berger | 68 |

### Beispiel 3:

8,0 kg Titandioxid P25 (100 % TiO₂)
1,0 kg 2 %ige Tylose-Lösung (0,25 % Tylose) (=Methylhydroxyethylcellulose)
werden in einem Mischer unter Zusatz von vollentsalztem Wasser vorgemischt. Das rieselfähige Pulvergemisch wird dann einem kontinuierlich arbeiteten Extruder (Continua der Fa. Werner & Pfleiderer) zugeführt und im Extruder mit soviel zusätzlichem vollentsalztem Wasser versetzt, daß eine bei 10 - 30 bar (= 1000 bis 3000 kilopascal) extrudierbare Masse entsteht. Die so erhaltenen Strangpreßlinge werden bei 70 °C getrocknet und bei 600 °C während 5 Stunden kalziniert. Die erhaltenen Formlinge haben folgende physikalischen Kenndaten:

| | | |
|---|---|---|
| 1 | Außendurchmesser | 0,8 mm |
| 2 | BET Oberfläche nach DIN 66 131 | 19 m²/g |
| 3 | Porenvolumen | 0,24 ml/g |
| 4 | Porenverteilung | 90 % innerhalb 20 - 50 nm |
| 5 | Bruchfestigkeit | 35 N/Strangpreßling |
| 6 | Zusammensetzung | > 99,5 % TiO₂ |
| 7 | TiO₂-Phase | 92 % Rutil, Rest Anatas |
| 8 | Weißgrad nach Berger | 75 |

### Beispiel 4:

8,0 kg Titandioxid (100 % TiO₂)
1,0 kg 2 %ige Tylose Lösung (0,25 % Tylose) (= Methylhydroxyethylcellulose)
100 g 90 %ige Milchsäure Lösung (1,13 % Milchsäure)
werden analog Beispiel 3 zu Strangpreßlingen verarbeitet. Die erhaltenen Formlinge weisen die folgenden physikalisch-chemischen Kenndaten auf:

| | | |
|---|---|---|
| 1 | Außendurchmesser | 0,7 mm |
| 2 | BET Oberfläche nach DIN 66 131 | 17 m²/g |
| 3 | Porenvolumen | 0,22 ml/g |
| 4 | Porenverteilung | 90 % innerhalb 10 - 60 nm |
| 5 | Bruchfestigkeit | 45 N/Strangpreßling |
| 6 | Zusammensetzung | > 99,5 % TiO₂ |
| 7 | TiO₂-Phase | 93 % Rutil, Rest Anatas |
| 8 | Weißgrad nach Berger | 65 |

## Patentansprüche

1. Titandioxidpreßlinge mit den folgenden physikalisch-chemischen Kenndaten:
| | |
|---|---|
| Außendurchmesser BET Oberfläche | 0,7 - 25 mm |
| nach DIN 66 131 | > 1 - 25 m²/g |
| Porenvolumen | 0,01 - 0,30 cm³/g |
| Porenverteilung | keine Poren < 10 nm mindestens 90 % der Poren im Bereich d_{Poren} = 10 - 60 nm |
| Bruchfestigkeit | 20 - 150 N/Preßling |
| TiO₂-Phase | > 90 % Rutil; Rest Anatas |
| Zusammensetzung | > 99 % TiO₂ |
| Weißgrad nach Berger | > 35 |

2. Verfahren zur Herstellung der Titandioxidpreßlinge gemäß Anspruch 1, dadurch gekennzeichnet, daß man pyrogen hergestelltes Titandioxid in Gegenwart von vollentsalztem Wasser mit Methylhydroxyethylcellulose und/oder mit Milchsäure intensiv vermischt, die erhaltene homogene Mischung ohne vorherige weitergehende Behandlung bei Drücken zwischen 5 und 100 bar (= 500 bis 10.000 kilopascal) zu Formkörpern extrudiert, die erhaltenen Formkörper bei Temperaturen zwischen 50 und 120 °C trocknet und sie dann in Umgebungsluft bei im Bereich von 400 - 800 °C liegenden Temperaturen 1 - 5 Stunden kalziniert.

3. Verwendung der Titandioxidpreßlinge nach Anspruch 1 als Katalysatorträger oder Katalysatoren.

## Claims

1. Titanium dioxide pressed articles having the following physical and chemical characteristics:
| | |
|---|---|
| Outer diameter | 0.7 - 25 mm |
| BET surface area to DIN 66 131 | > 1 - 25 m²/g |
| Pore volume | 0.01 - 0.30 cm³/g |
| Pore distribution | no pores < 10 nm at least 90% of pores in the range dₚₒᵣₑₛ = 10 - 60 nm |
| Breaking strength | 20 - 150 N/pressed article |
| TiO₂ phase | > 90% rutile; remainder anatase |
| Composition | > 99% TiO₂ |
| Whiteness coefficient after Berger | > 35 |

2. A method of manufacturing the titanium dioxide pressed articles according to claim 1, characterised in that pyrogenically prepared titanium dioxide in the presence of completely demineralized water is intensively mixed with methyl hydroxyethyl cellulose and/or with lactic acid, the homogeneous mixture, without other pretreatment, is extruded to obtain moulded members at pressures between 5 and 100 bar (= 500 to 10.000 kilopascals), and the resulting moulded members are dried at temperatures between 50 and 120°C and then calcined in atmospheric air at temperatures in the range of 400 to 800°C for 1 - 5 hours.

3. Use of the titanium dioxide pressed articles according to claim 1 as catalyst carriers or catalysts.

## Revendications

1. Corps moulés de dioxyde de titane ayant les caractéristiques physico-chimiques suivantes :
| | |
|---|---|
| Diamètre extérieur | 0,7 - 25 mm |
| Surface BET selon DIN 66131 | > 1-25 m^{2/g} |
| Volume des pores | 0,01 - 0,30 ml/g |
| Répartition des pores | au moins 30 % des pores dans le groupe des pores = 10 - 60 nm |
| Résistance à la rupture | 20-150 N /comprimé |
| Phase TiO₂ | 90 % de rutile, le reste Anatas |
| Composition | > 99 % de TiO₂ |
| Degré de blanc selon Berger | > 35 |

2. Procédé de fabrication de comprimés de dioxyde de titane selon la revendication 1, caractérisé en ce que on mélange du dioxyde de titane obtenu par pyrogénation en présence d'eau totalement déminéralisée avec de la méthylhydroxyéthylcellulose et/ou avec de l'acide lactique, on extrude le mélange homogène obtenu sans traitement de continuité préalable à des pressions comprises entre 5 et 100 bars (= 500 à 1000 kilopascals) en corps moulés, on sèche les corps moulés à des températures comprises entre 50 et 120°C et on les calcine alors dans l'air ambiant à des températures se situant dans la zone 400-800°C pendant 1 à 5 heures.

3. Utilisation des comprimés de dioxyde de titane selon la revendication 1 comme supports de catalyseurs ou catalyseurs.
